# EUROPÄISCHE PATENTANMELDUNG

(11) **EP 4 124 784 A1**
(43) Veröffentlichungstag der Anmeldung: **01.02.2023**
(21) Anmeldenummer: 22185932.5
(22) Anmeldetag: 20.07.2022
(51) Int. Cl.: F16H 61/431, F16H 61/4148, F04B 49/00, F16H 61/4017, F02D 29/04

(54) **HYDROMASCHINE MIT STEUEREINHEIT UND VERFAHREN ZUR STEUERUNG EINER HYDROMASCHINE**

(30) Priorität: 27.07.2021 DE 102021208083
(71) Anmelder: Robert Bosch GmbH, 70442 Stuttgart (DE)
(72) Erfinder: Golde, Marcel, 88471 Laupheim (DE); Howind, Joern, 71149 Bondorf (DE); Tetik, Salih, 89278 Nersingen (DE); Nordt, Friedemann, 72184 Eutingen (DE); Hefner, Julian, 72178 Waldachtal (DE); Meyer, Jonas, 97816 Lohr A. Main (DE); Dreher, Simon, 71034 Boeblingen (DE)

(57) **Zusammenfassung**

Offenbart ist eine Hydromaschine zum Betrieb im offenen hydraulischen Kreis, die zum Verstellen ihres Verdrängungsvolumens einen Stellzylinder mit einem von einem Stellkolben begrenzten Steuerraum hat, wobei ein Ventil vorgesehen ist, welches von einer elektronischen Steuereinheit in Abhängigkeit einer Anforderung an eine Betriebsgröße der Hydromaschine und eines rückgeführten Ist-Wertes elektrisch derart ansteuerbar ist, dass über das Ventil der Steuerraum mit Stelldruckmittel beschickbar ist und/oder Stelldruckmittel aus dem Steuerraum abführbar ist.

Offenbart ist zudem ein Verfahren zur Steuerung einer derartigen Hydromaschine.

## Beschreibung

Die Erfindung betrifft eine Hydromaschine mit einer Steuereinheit gemäß Patentanspruch 1, sowie ein Verfahren zur Steuerung einer Hydromaschine gemäß Patentanspruch 9.

Eine gattungsgemäße Hydromaschine ist zur hydraulisch-mechanischen Leistungswandlung im offenen, hydraulischen Kreis vorgesehen ist. Die Hydromaschine kann für den Pumpenbetrieb oder für den Motorbetrieb ausgelegt sein. Für eine effiziente, bedarfsgerechte Einstellung, beispielsweise eines Druckmittelvolumenstroms, eines Arbeitsdrucks, eines Drehmoments oder dergleichen, ist die Hydromaschine mit verstellbarem Verdrängungsvolumen ausgestaltet. Zur Verstellung weist sie eine elektrohydraulische Verstelleinheit mit einem elektrisch ansteuerbaren Pilotventil und einem davon mit Druckmittel versorgbaren Verstellzylinder auf.

Für eine Drehmomentumkehr/Lastumkehr, insbesondere für einen Wechsel vom Pumpen- in den Motorbetrieb, beziehungsweise umgekehrt, kann die Hydromaschine mit einem zu Null und beidseitig davon verstellbaren Verdrängungsvolumen ausgestaltet sein.

Bei fluidischer Verbindung derartiger Hydromaschinen im offenen Kreis kann eine mit einer Antriebsmaschine, beispielsweise einer Verbrennungskraft- oder einer Elektromaschine, und die andere mit einem Abtrieb, beispielsweise einem Getriebe, einem Rad oder einer Achse gekoppelt sein. Ein solcher Antrieb kann beispielsweise ein Fahrantrieb einer mobilen Arbeitsmaschine sein.

Der offene hydraulische Kreis ist vorzugsweise realisiert, indem die Hydromaschinen einerseits über eine Arbeitsleitung und andererseits mit einer Druckmittelsenke, insbesondere mit einem Tank, fluidisch verbunden sind. Beide Hydromaschinen können vorzugsweise je nach Anforderung im Pumpenbetrieb und im Motorbetrieb arbeiten. Druckmittelanschlüsse der Hydromaschinen zum Niederdruck und zur Arbeitsleitung sind jeweils dauerhaft. Ein Druckseitenwechsel, wie er im geschlossen Kreis für eine Lastumkehr nötig ist, ist somit nicht vorgesehen.

Ein derartiger Antrieb im offenen Kreis kann auf einfache Weise um hydraulische Arbeitsverbraucher, beispielsweise Hydrozylinder in Differentialbauweise, ergänzt werden, indem diese über eine Ventileinrichtung mit der Druck- und der Niederdruckseite des hydraulischen Kreises verbunden werden können.

Der Hydromaschine - oder dem Antrieb - ist eine elektronische Steuereinheit zugeordnet, über die eine Betriebsgröße der Hydromaschine oder des Antriebes, orientiert an einer Anforderung und einer elektronisch rückgeführten Betriebsgröße, regelbar ist.

Im Falle eines drehmomentbasierten Fahrantriebes sind beispielsweise über die Steuereinheit der Arbeitsdruck der Arbeitsleitung und das Verdrängungsvolumen der mit dem Abtrieb koppelbaren Hydromaschine regelbar. Ersteres erfolgt durch Ansteuerung der Verstelleinheit der mit der Antriebsmaschine koppelbaren Primäreinheit, letzteres durch Ansteuerung der Verstelleinheit der mit dem Abtrieb koppelbaren Sekundäreinheit. Ein jeweiliger Ist-Wert des Arbeitsdrucks und des genannten Verdrängungsvolumens wird erfasst und an die Steuereinheit elektronisch rückgeführt.

Das Konzept der elektronischen Rückführung einer Regelgröße einer Hydromaschine (anstatt einer hydraulisch-mechanischen Rückführung) ist aus dem Sortiment der Anmelderin als "Electronified Open Circuit"- oder "EOC"-Hydromaschine bekannt und ist in der Druckschrift EP 377 04 28 A1 beschrieben.

Hydromaschinen haben Einsatzgrenzen, die für einen zulässigen Betrieb eingehalten werden müssen, um kurz- und langfristige Schäden zu verhindern. Dabei sind unterschiedlichste Schadensmechanismen zu verhindern. So dürfen beispielsweise in Abhängigkeit des Niederdrucks des offenen Kreises und des Ist-Verdrängungsvolumens der ansaugenden Hydromaschine weder eine Grenz-Drehzahl, noch eine Verstell-Dynamik überschritten werden, da sonst beispielsweise Kavitation am Sauganschluss oder eine zu hohe mechanische Belastung am Triebwerk auftreten können. Andererseits muss beispielsweise die Verstellgeschwindigkeit der Verstelleinheit begrenzt werden, um mechanische Belastungen beim Anschlagen in Endstellungen im Rahmen zu halten und so Dauerfestigkeit sicherzustellen.

Die genannte Verstellgeschwindigkeit und Verstelldynamik ist bei konventioneller Ausgestaltung der Hydromaschine durch Drosselstellen im hydraulisch-mechanischen Regler oder im Stellkolben der Verstelleinheit realisiert, sodass der Stelldruckmittelvolumenstrom in die Stellkammer der Verstelleinheit, welcher maßgeblich den hydraulischen Stelldruck bestimmt und damit Einfluss auf die Verstellgeschwindigkeit und -dynamik nimmt, im Nahbereich der Einsatzgrenzen gedrosselt/reduziert wird.

Nachteilig an solchen hydraulisch-mechanischen Lösungen ist, dass sie bei vorrichtungstechnisch einfacher Ausgestaltung fest sind, das heißt sie sind nicht anpassbar und somit dauerhaft. Zwar kann ihre Wirksamkeit auf problematische Betriebszustände eingegrenzt werden, jedoch ist dies mit hohem vorrichtungstechnischem Zusatzaufwand verbunden. Zudem fallen dadurch auch in unkritischen Betriebsbereichen zusätzliche hydraulische Drosselverluste an, was sich negativ auf den Wirkungsgrad der Einheiten auswirkt.

Demgegenüber liegt der Erfindung die Aufgabe zugrunde, eine Hydromaschine mit einem selektiven Schutz gegen das Überschreiten ihrer Betriebsgrenzen bei gleichzeitig verringertem vorrichtungstechnischem Aufwand zu schaffen. Eine weitere Aufgabe liegt darin, ein Verfahren zur Steuerung einer solchen Hydromaschine zu schaffen, durch das diese selektiv gegen das Überschreiten ihrer Betriebsgrenzen geschützt werden kann.

Die erste Aufgabe wird gelöst durch eine Hydromaschine mit den Merkmalen des Patentanspruchs 1, die zweite durch ein Verfahren mit den Merkmalen des Patentanspruchs 9.

Vorteilhafte Weiterbildungen der Hydromaschine sind in den Patentansprüchen 2 bis 8, die des Verfahrens in den Patentansprüchen 10 bis 13 beschrieben.

Eine Hydromaschine ist zum Betrieb im offenen hydraulischen Kreis vorgesehen. Insbesondere ist eine Druckseite oder ein Druckanschluss der Hydromaschine zur dauerhaften Verbindung mit einer Druck- oder Arbeitsleitung und eine Niederdruckseite oder ein Niederdruckanschluss zur dauerhaften Verbindung mit einem Niederdruckreservoir, beispielsweise einem Tank vorgesehen. Die Hydromaschine kann zur vorzugsweisen Verwendung als Hydropumpe mit einer Antriebsmaschine oder zur vorzugsweisen Verwendung als Hydromotor mit einem Abtrieb koppelbar vorgesehen sein. Die Antriebsmaschine kann beispielsweise eine drehzahlvariabel oder drehzahlkonstant betreibbare Elektromaschine, Verbrennungskraftmaschine oder eine andere Primärquelle mechanischer Wellenleistung sein. Der Abtrieb kann beispielsweise eine Achse oder ein Rad oder ein Getriebe eines Fahrzeugs, insbesondere einer mobilen Arbeitsmaschine sein. Zum Verstellen ihres Verdrängungsvolumens, insbesondere zum effizienten Erfüllen einer die Hydromaschine betreffenden Anforderung, hat die Hydromaschine einen Stellzylinder mit einem von einem Stellkolben begrenzten Steuerraum. Zum Verstellen in Abhängigkeit der Anforderung ist der Steuerraum über ein Ventil der Hydromaschine, insbesondere ein Pilotventil, zum einen mit Stelldruckmittel beschickbar und zum anderen ist über das Ventil aus dem Steuerraum Stelldruckmittel entlassbar. Die Ansteuerung des Ventils erfolgt elektrisch über eine elektronische Steuereinheit der Hydromaschine, und zwar in Abhängigkeit der Anforderung an die Betriebsgröße der Hydromaschine und eines rückgeführten Ist-Wertes. Diese elektronische Rückführung einer Regelgröße der Hydromaschine im offenen Kreis ist seitens der Anmelderin als "Electronified Open Circuit"- oder "EOC"-Hydromaschine bekannt. Erfindungsgemäß ist die elektronische Steuereinheit mit wenigstens einer Betriebsgrenze der Hydromaschine in Abhängigkeit wenigstens einer Betriebsgröße der Hydromaschine eingerichtet. Auf Basis der elektronisch eingerichteten Betriebsgrenze ist die Steuereinheit befähigt, die Ansteuerung des Ventils zu beeinflussen, sodass die Betriebsgrenze berücksichtigt ist, also nicht überschritten oder verletzt wird.

Mit der erfindungsgemäßen Steuereinheit kann an der Hydromaschine auf mechanisch-hydraulische Vorrichtungen verzichtet werden, um die Betriebsgrenzen einhalten zu können. Die elektronisch eingerichtete Betriebsgrenze ermöglicht den selektiven Eingriff der Steuereinheit in die Ansteuerung, anders als dies bei dauerhaft wirksamen, vorrichtungstechnischen Maßnahmen der Fall ist. Dies erweitert den Einsatzbereich der Hydromaschine und spart einerseits vorrichtungs- und wartungstechnische Kosten ein und andererseits können Betriebskosten gesenkt werden, da Drosselverluste abseits der Betriebsgrenze entfallen und Druckmittel- und Stelldruckmittelenergie effizienter genutzt wird. Zuvor genannte, mechanisch-hydraulische Mittel zur Begrenzung der Hydromaschine können natürlich ergänzend, beispielsweise zum Zwecke der Redundanz, vorgesehen sein.

Bei Verwendung wenigstens zweier solcher Hydromaschinen können diese den offenen Kreis ausbilden. Hierzu sind die Druckseiten der Hydromaschinen über eine Arbeitsleitung fluidisch verbunden. Ihre Niederdruckseiten sind hingegen mit einem Niederdruck, Niederdruckreservoir oder einem Tank fluidisch verbunden. Ein Druckseitenwechsel ist nicht vorgesehen. Beide Hydromaschinen weisen jeweils ein zu Null und beidseitig davon verstellbares Verdrängungsvolumen auf, wobei für die jeweilige Verstellung jeweils ein zuvor genanntes Ventil mit zugeordnetem Stellzylinder vorgesehen ist. Das Stelldruckmittel stammt vorzugsweise aus der Arbeitsleitung und steht an einem Druckanschluss des jeweiligen Ventils an. Eine Druckmittelsenke der Verstelleinheit ist vorzugsweise der Niederdruck, das Niederdruckreservoir oder der Tank. Zum Schutz des Antriebes und seiner Komponenten, insbesondere des hydraulischen Kreises und der Hydromaschinen, sind in der Steuereinheit die Betriebsgrenzen beider Hydromaschinen eingerichtet, es ist nicht notwendig, dass beiden Hydromaschinen eine jeweilige Steuereinheit zugeordnet ist. Die Anmelderin behält sich vor, einen unabhängigen Anspruch auf einen derartigen Antrieb zu richten.

Die Anforderung kann beispielsweise einen Soll-Arbeitsdruck, ein Soll-Verdrängungsvolumen oder eine diesem zugrundeliegende oder zugeordnete, kinematische Soll-Größe - wie beispielsweise ein Soll-Schwenkwinkel, eine Soll-Drehzahl, ein Soll-Drehmoment, einen Soll-Druckmittelvolumenstrom, eine Soll-Leistung der Hydromaschine und/oder einen zeitlichen Soll-Gradienten dieser Soll-Größen beinhalten.

Die wenigstens eine Betriebsgrenze kann beispielsweise einen zulässigen Arbeitsdruck, ein zulässiges Verdrängungsvolumen, eine zulässige Drehzahl, ein zulässiges Drehmoment, einen zulässigen Druckmittelvolumenstrom, eine zulässige Leistung der Hydromaschine oder ein zulässiger zeitlicher Gradient dieser Größen sein.

Die wenigstens eine Betriebsgröße, in Abhängigkeit von der die wenigstens eine Betriebsgrenze eingerichtet ist, kann beispielsweise ein aktueller Arbeitsdruck, ein aktueller Ansaugdruck, eine aktuelle Temperatur, ein aktuelles Verdrängungsvolumen, eine aktuelle Drehzahl, ein aktuelles Drehmoment, ein aktueller Druckmittelvolumenstrom, eine aktuelle Leistung der Hydromaschine oder ein zeitlicher Gradient der genannten Betriebsgrößen sein.

Die Anforderung oder Anforderungen ist oder sind beispielsweise von einer übergeordneten Steuerung gemäß einem Wunsch eines Bedienpersonals an die Steuereinheit übermittelbar.

In einer Weiterbildung sind die Betriebsgrenzen adaptiv, insbesondere parametrisiert, eingerichtet. So können die Betriebsgrenzen beispielsweise in Abhängigkeit der Applikation der Hydromaschine oder des Antriebes, beispielsweise in unterschiedlichen Arbeitsmaschinen, oder in Abhängigkeit einer abweichend gewünschten Charakteristik der Hydromaschine oder des Antriebes mit wenig Aufwand an den Bedarf angepasst werden. Im Falle herkömmlicher, vorrichtungstechnische Maßnahmen stünde in diesen Fällen ein aufwändiger Umbau, beispielsweise durch Austauschen von Düsen oder Stellkolben, an.

In einer bevorzugten Weiterbildung ist die Betriebsgrenze ein zulässiges Verdrängungsvolumen und in Abhängigkeit einer erfassbaren Drehzahl der Hydromaschine eingerichtet. Ergänzend kann das zulässige Verdrängungsvolumen in Abhängigkeit der erfassbaren Temperatur, des erfassbaren Arbeitsdrucks und/oder des erfassbaren Ansaugdrucks der Hydromaschine eingerichtet sein.

Je nach Verwendung oder Verbau der Hydromaschine ist diese auf eine vorbestimmte oder bevorzugte Betriebsart optimiert ausgelegt. Diese Betriebsart ist für die Hydromaschine, die mit einer Antriebsmaschine koppelbar vorgesehen ist, beispielsweise ein Pumpenbetrieb. Für die Hydromaschine, die zur Kopplung mit einem Abtrieb vorgesehen ist, ist dies beispielsweise ein Motorbetrieb.

Die Optimierung betrifft in der jeweiligen Betriebsart insbesondere die Umsteuerung der hydrostatischen Arbeitsräume von Niederdruck auf Arbeitsdruck, und umgekehrt, sowie eine Triebwerksentlastung.

In einer Weiterbildung ist daher die wenigstens eine Betriebsgrenze in der Steuereinheit jeweils individuell für die möglichen Betriebsarten der Hydromaschine eingerichtet.

Für die nicht-bevorzugte Betriebsart, das heißt für diejenige, auf die die Hydromaschine nicht optimiert ausgelegt ist, ist die Betriebsgrenze in der Steuereinheit vorzugsweise strenger oder restriktiver eingerichtet.

Es ergeben sich für den Pumpenbetrieb der Hydromaschine folgende wichtigen Betriebsgrenzen:
Eine Saugfähigkeitsgrenze. Diese ist als drehzahlabhängige Begrenzung des zulässigen Verdrängungsvolumens eingerichtet. Bei Ausgestaltung als Axialkolbenmaschine mit verschwenkbarer Schrägscheibe bedeutet das die drehzahlabhängige Begrenzung des zulässigen Schwenkwinkels.

Eine Triebwerksbelastungsgrenze. Diese kann als verdrängungsvolumenabhängige Begrenzung des zulässigen Arbeitsdrucks, oder umgekehrt, als arbeitsdruckabhängige Begrenzung des zulässigen Verdrängungsvolumens eingerichtet sein.

Im Falle der Weiterbildung mit zu null und beidseitig davon verstellbarem Verdrängungsvolumen, insbesondere Schwenkwinkel, und aufgrund der unveränderlichen Druckseiten der Hydromaschine im offenen Kreis, besteht eine feste Abhängigkeit zwischen einem Vorzeichen des Verdrängungsvolumens und der Betriebsart.

In einer Weiterbildung ist die Steuereinheit daher eingerichtet, in Abhängigkeit des Vorzeichens des Verdrängungsvolumens oder des Schwenkwinkels die Betriebsart zu ermitteln.

In einer Weiterbildung ist die Steuereinheit eingerichtet, aus der Betriebsart die zugeordnete oder zugeordneten Betriebsgrenzen als für die Steuerung gültig auszuwählen.

In einer Weiterbildung ist die Steuereinheit eingerichtet, aus dem erfassten Schwenkwinkel der Hydromaschine deren Betriebsart, insbesondere den Pumpenbetrieb, zu ermitteln. Auf Antriebsebene entspricht der Pumpenbetrieb einem Schub- oder Verzögerungsbetrieb.

In einer Weiterbildung und insbesondere für den Fall des Antriebes, ist die Steuereinheit eingerichtet, den Schwenkwinkel der abtriebsseitigen Hydromaschine im ermittelten Schub- oder Verzögerungsbetrieb in Abhängigkeit der erfassten Drehzahl und/oder des erfassten Arbeitsdrucks zu begrenzen.

In einer Weiterbildung ist über die Steuereinheit eine Verstellgeschwindigkeit oder - dynamik des Verdrängungsvolumens oder des Schwenkwinkels hin zu einem minimalen oder einem Null-Verdrängungsvolumen begrenzbar, insbesondere innerhalb eines Intervalls, das vom minimalen oder Null-Verdrängungsvolumen und einem in der Steuereinheit abgelegten Prozentwert des maximalen Verdrängungsvolumens begrenzt ist. Bei zu null und beidseitig davon verstellbarem Verdrängungsvolumen oder Schwenkwinkel kann sich das Intervall beidseitig von null, insbesondere mit unterschiedlichen Prozentwerten, erstrecken. Das maximale Verdrängungsvolumen weist in einer Verstellrichtung diesseits von null ein positives und jenseits davon ein negatives Vorzeichen auf.

Das minimale Verdrängungsvolumen, das maximale Verdrängungsvolumen, sowie davon jeweils begrenzte Intervalle, insbesondere die Prozentwerte, sind in einer Weiterbildung in der Steuereinheit parametrierbar abgelegt.

Mit Erreichen des Intervalls, also kurz vor dem Erreichen des minimalen oder maximalen Verdrängungsvolumens ist in einer Weiterbildung über die Steuereinheit ein Ansteuersignal an die Verstelleinheit übermittelbar, welches zur Verlangsamung der Verstell- oder Schwenkgeschwindigkeit führt.

Hierzu ist in einer Weiterbildung über die Steuereinheit eine Ableitung des Schwenkwinkels, beziehungsweise eine Ableitung der dem Verdrängungsvolumen zugrundeliegenden kinematischen Größe, ermittelbar und die Ableitung ist mit einem in der Steuereinheit abgelegten Faktor multiplizierbar. Das Produkt geht als Korrektur Schwenkwinkel in den aktuell angeforderten Schwenkwinkel-Sollwert ein und wirkt im Sinne einer verringerten Schwenkwinkeländerung, also eines geringeren, zeitlichen Gradienten des Schwenkwinkels. Auf diese Weise kann eine Aufpralldynamik auf einen mechanischen Anschlag im Bereich des maximalen und/oder minimalen Verdrängungsvolumens zumindest limitiert werden und die Hydromaschine vor Beschädigung geschützt werden.

In einer Weiterbildung ist die Steuereinheit derart eingerichtet, dass über sie eine Regelung auf das maximale und/oder minimale Verdrängungsvolumen möglich ist, sodass mechanische Anschläge obsolet sind. Der Entfall solch mechanischer Anschläge ist mit einer Kostenersparnis verbunden.

Die Parameter der Betriebsgrenzen sind beispielsweise über Prüfstandsversuche, über Simulationen oder Abnahmemessungen an einer Zielmaschine des Antriebs ermittelbar und in Folge in der Steuereinheit ablegbar.

Um das jeweilige Ist-Verdrängungsvolumen der Hydromaschine in die Regelung und die Begrenzung einfließen lassen zu können, ist in einer Weiterbildung eine jeweilige Erfassungseinheit zur Erfassung der das Verdrängungsvolumen bestimmenden kinematischen Größe vorgesehen. Dies kann ein mit der Schrägscheibe in Wirkverbindung stehender Schwenkwinkelsensor oder ein mit der Verstelleinheit, insbesondere mit dessen Stellkolben, in Wirkverbindung stehender Wegsensor sein. Ergänzend, insbesondere um die Regelung und Begrenzung des Drucks, des Drehmoments und/oder der Leistung zu ermöglichen, ist in einer Weiterbildung ein mit den Druckseiten, insbesondere der Arbeitsleitung fluidisch verbundener Drucksensor vorgesehen. Die Sensoren sind natürlich mit der Steuereinheit signalverbunden.

In einer Weiterbildung ist die Betriebsgrenze des Verdrängungsvolumens der Hydromaschine in Abhängigkeit von deren Drehzahl, des Arbeitsdrucks und/oder einer Temperatur des Triebwerks oder Druckmittels in der Steuereinheit abgelegt.

In einer Weiterbildung ist ein Geschwindigkeitsregler vorgesehen, über den die Betriebsgrenze des zeitlichen Gradienten des Verdrängungsvolumens der jeweiligen Hydromaschine regelbar ist.

Ein erfindungsgemäßes Verfahren dient der Steuerung einer Hydromaschine, die zum Betrieb im offenen hydraulischen Kreis ausgestaltet ist. Zum Verstellen ihres Verdrängungsvolumens hat sie einen Stellzylinder mit einem von einem Stellkolben begrenzten Steuerraum. Über ein Ventil ist dieser mit Stelldruckmittel beschickbar und aus dem Steuerraum ist Stelldruckmittel abführbar. Die elektrische Ansteuerung des Ventils erfolgt über elektronische Steuereinheit in Abhängigkeit einer Anforderung an eine Betriebsgröße der Hydromaschine und eines rückgeführten Ist-Wertes. Hierzu weist das Verfahren die Schritte "Erfassen der Anforderung", "Erfassen des rückzuführenden Ist-Wertes", "Ermitteln einer Abweichung in Abhängigkeit der beiden", "Ermitteln eines Ansteuersignals des Ventils in Abhängigkeit der Abweichung" sowie "Ansteuern des Ventils damit" auf. In der Steuereinheit ist des Weiteren wenigstens eine Betriebsgrenze der Hydromaschine in Abhängigkeit wenigstens einer Betriebsgröße der Hydromaschine eingerichtet. Erfindungsgemäß weist das Verfahren Schritte "Erfassen dieser wenigstens einen Betriebsgröße", und in Abhängigkeit davon, "Ermitteln, ob die Betriebsgrenze verletzt wird oder durch oben genanntes Ansteuern verletzt würde" auf. Falls die Verletzung ermittelt wird, folgt ein Schritt "Beeinflussen des Ansteuersignals oder der zugrundeliegenden Anforderung oder der Abweichung derart, dass die Betriebsgrenze eingehalten wird".

In einer Weiterbildung des Verfahrens ist die Betriebsgrenze ein zulässiges Verdrängungsvolumen oder eine dem Verdrängungsvolumen zugrundeliegende, kinematische Größe, wobei die wenigstens eine Betriebsgröße eine Drehzahl ist.

In einer Weiterbildung ist wird wenigstens eine zusätzliche Betriebsgröße erfasst, in Abhängigkeit von der die Betriebsgrenze des zulässigen Verdrängungsvolumens eingerichtet ist. Diese ist bevorzugt ein Niederdruck oder Ansaugdruck, ein Arbeitsdruck oder Hochdruck und/oder eine Temperatur sein.

In einer Weiterbildung wird ein Arbeits- oder Hochdruck, ein Verdrängungsvolumen, ein Druckmittelvolumenstrom und/oder ein Drehmoment der Hydromaschine angefordert, wobei der Arbeits- oder Hochdruck, das Verdrängungsvolumen oder eine diesem zugrundeliegende, kinematische Größe, und/oder ein Gradient des Verdrängungsvolumens oder der Größe in Abhängigkeit der wenigstens einen Betriebsgröße begrenzt wird oder werden.

In einer Weiterbildung wird die wenigstens eine Betriebsgrenze und deren Abhängigkeit von der wenigstens einen Betriebsgröße über einen Prüfstandsversuch, eine Simulation oder eine Abnahmemessung an der Hydromaschine ermittelt.

Im Folgenden wird ein Ausführungsbeispiel eines Antriebs mit erfindungsgemäßen Hydromaschinen anhand der Figur näher erläutert.

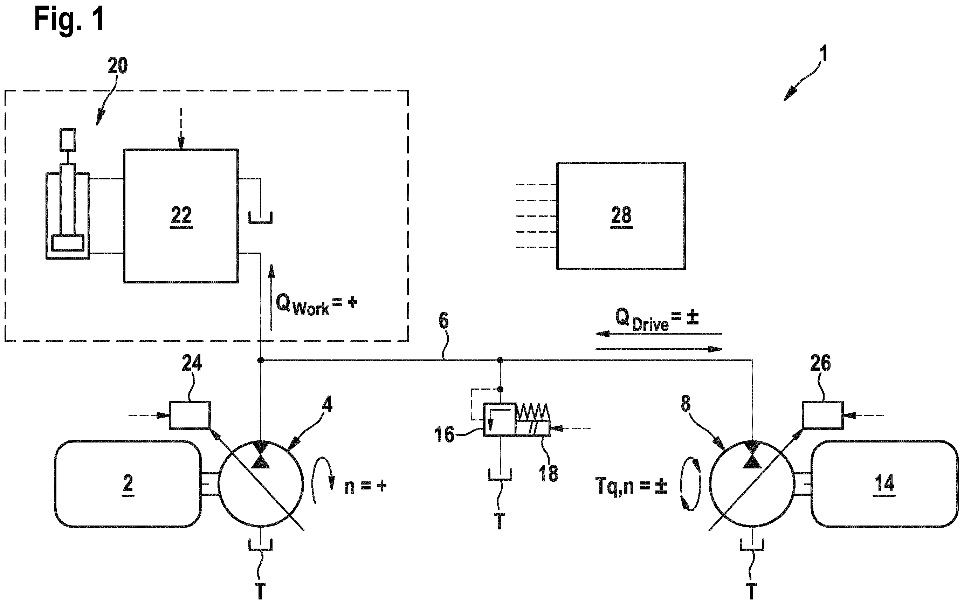

Figur 1 zeigt ein Schema eines hydrostatischen Antriebes 1 gemäß einem Ausführungsbeispiel. Gemäß Figur 1 hat der als Fahr- und Arbeitsantrieb ausgebildete Antrieb 1 eine mit einer Antriebsmaschine 2 gekoppelte erste Hydromaschine 4 und eine mit dieser über eine Arbeitsleitung 6 fluidisch verbundene, mit einem abtriebsseitigen Getriebe 14 gekoppelte, zweite Hydromaschine 8. Die Hydromaschinen 4, 8 haben jeweils eine elektrohydraulische Verstelleinheit 24, 26, über die sie in ihrem Verdrängungsvolumen verstellbar sind. Die jeweilige Hydromaschine 4, 8 basiert auf der aus dem Sortiment der Anmelderin bekannten EOC- oder "Electronified Open Circuit"- Hydromaschine und ist gegen das Überschreiten ihrer jeweiligen Betriebsgrenze(n) mittels einer erfindungsgemäß eingerichteten Steuereinheit 28 geschützt. Dieser Komponentenschutz wird weiter unten erläutert.

Der Antrieb 1 ist gegen einen Überdruck über ein Druckbegrenzungsventil 16 abgesichert, dessen Soll-Grenzdruck im gezeigten Ausführungsbeispiel durch Ansteuerung eines Elektromagneten 18 einstellbar ist.

Der Antrieb 1 hat zudem einen hydrostatischen Arbeitsverbraucher 20, der im gezeigten Ausführungsbeispiel als Hydrozylinder ausgestaltet ist. Zu dessen Druckmittelversorgung ist die Arbeitsleitungen 6 mit dem Hydrozylinder 20 über einen Steuerventilblock 22 verbunden.

In einem bestimmungsgemäßen Betrieb dreht die Antriebsmaschine 2 in konstantem Drehsinn, der gemäß Figur 1 mit n = + symbolisiert ist. Dann ist die erste Hydromaschine 4 im Pumpenbetrieb und die zweite Hydromaschine 8 im Motorbetrieb.

Die Hydromaschinen 4, 8 sind jeweils mit verstellbarem Verdrängungsvolumen ausgestaltet. Hierzu weisen sie gemäß Figur 1 jeweils eine elektrohydraulische Verstelleinheit 24, 26 auf, von der eine das jeweilige Verdrängungsvolumen bestimmende Schrägscheibe der Hydromaschinen 4, 8 angelenkt ist. Die Verdrängungsvolumina sind dabei jeweils zu Null und beidseitig davon verstellbar. Das heißt, die Hydromaschinen 4, 8 sind jeweils mit einem sogenannten "durchschwenkbaren" Verdrängungsvolumen ausgestaltet. So ist eine Volumenstromumkehr im hydraulischen Kreis trotz gleichbleibender Anschlussverbindungen der Hydromaschinen 4, 8 mit der Arbeitsleitung 6 und der Druckmittelsenke T, insbesondere zum Reversieren der Fahrtrichtung und zum Übergang vom Zug- in den Schleppbetrieb und umgekehrt, ermöglicht.

Die mit dem Reversieren und dem Übergang verbundenen Wechsel der Volumenstromrichtung QDrive = ± und der Drehmomentrichtung Tq,n = ± am Abtrieb sind in Figur 1 skizziert.

Die Steuereinheit 28 ist signalgebend mit den elektrohydraulischen Verstelleinheiten 24, 26, dem Elektromagneten 18 des Druckbegrenzungsventils 16 und dem Steuerventil 22 verbunden. Signalempfangend ist sie mit mehreren Erfassungseinheiten zum Erfassen von Betriebsgrößen verbunden, was im Folgenden erläutert wird.

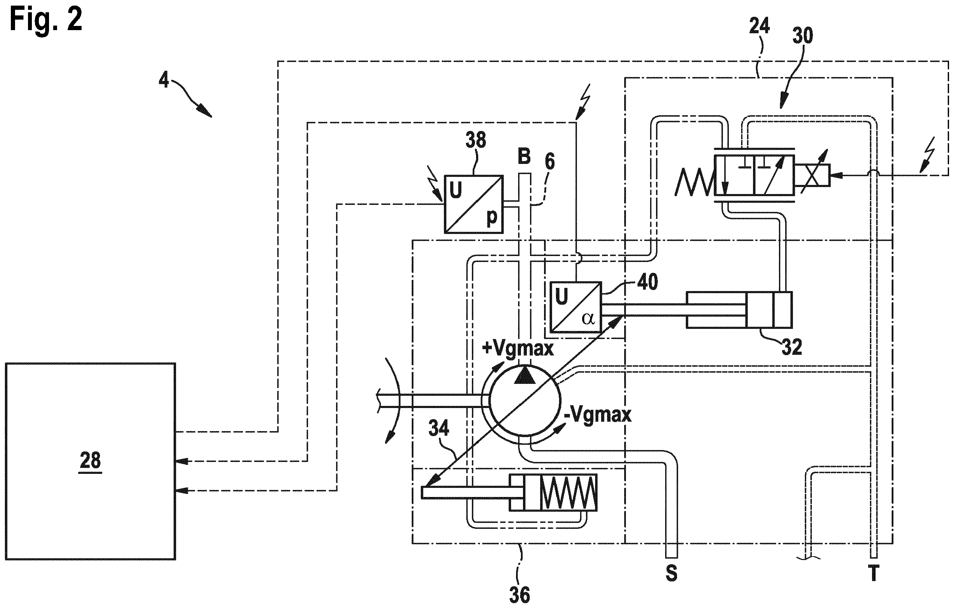

Figur 2 zeigt eine detailliertere Darstellung der im bestimmungsgemäßen Zugbetrieb im Pumpenbetrieb arbeitenden, ersten Hydromaschine 4. Die folgenden Betrachtungen gelten ebenso für die zweite Hydromaschine 8, mit dem Unterschied, dass deren Triebwelle mit dem Getriebe 14 gekoppelt ist, während die Triebwelle der ersten Hydromaschine 4 mit der Antriebsmaschine 2 gekoppelt ist.

Gemäß Figur 2 hat die elektrohydraulische Verstelleinheit 24 ein elektromagnetisch betätigbares von der Steuereinheit 28 ansteuerbares Ventil 30 mit einem Druckanschluss, der fluidisch mit der Arbeitsleitung 6 verbunden ist. Ein Niederdruck- oder Tankanschluss des Ventils 30 ist mit der Druckmittelsenke T fluidisch verbunden. Des Weiteren hat das Ventil 30 einen Anschluss, der mit einem Stelldruck- oder Steuerraum eines Stellzylinders 32 der elektrohydraulischen Verstelleinheit 24 verbunden ist.

In unbestromtem Zustand ist ein Ventilkörper des Ventils 30 von einer Feder in eine Endstellung belastet, in der die Arbeitsleitung 6 mit dem Steuerraum des Stellzylinders 32 verbunden ist. Bei elektromagnetischer Betätigung des Ventils 30 ist dieser Steuerraum mit dem Niederdruck T verbunden. Alternativ kann das Ventil 30 der elektrohydraulischen Verstelleinheit 24 invertiert ausgestaltet sein, sodass in unbestromtem Zustand die Druckmittelsenke T mit dem Steuerraum des Verstellzylinders 32 und in bestromtem Zustand der Steuerraum mit der Arbeitsleitung 6 verbunden ist. Zwischenstellungen, in denen der Steuerraum sowohl mit der Arbeitsleitung 6, als auch mit dem Niederdruck T verbunden ist, sind natürlich in beiden Varianten, beispielsweise mittels einer negativen Überdeckung oder Unterdeckung von Steuerkanten möglich.

Der Steuerraum des Stellzylinders 32 ist von einem Stellkolben begrenzt, von dem die Schrägscheibe 34 der ersten Hydromaschine 4 in stromlosem Zustand des Ventils 30 in Richtung eines (positiven) Maximal-Verdrängungsvolumens +Vgmax belastet ist. Der Wert +Vgmax ist im vorliegenden Ausführungsbeispiel für die im Pumpenbetrieb arbeitende erste Hydromaschine 4 so definiert, dass für eine gegebene Drehrichtung und Drehzahl der Antriebsmaschine 2 von der ersten Hydromaschine 4 der maximale (positive) Fördervolumenstrom Q+max bereitgestellt wird. An der Schrägscheibe 34 greift im Ausführungsbeispiel in entgegengesetzter Verstellrichtungen ein federbelasteter Gegenkolben einer elektrounabhängigen, hydraulisch-mechanischen Verstelleinheit 36 an. Der Gegenkolben ist zudem ständig mit der Arbeitsleitung 6 verbunden. Am Gegenkolben wirken also Federkraft und das Produkt aus Arbeitsdruck und Kolbenfläche ausschwenkend in Richtung Vgmax.

Die Gegenkraft des Gegenkolbens kann alternativ durch beispielsweise eine Verdrillung der zur Umsteuerung der Arbeitsräume vorgesehenen Steuerscheibe erzeugt werden, sodass auf die Verstelleinheit 36 verzichtet werden kann oder diese kleiner ausgelegt werden kann. Der Steuerraum der Verstelleinheit 36 ist gemäß Figur 2 permanent mit der Arbeitsleitung 6 druckmittelverbunden.

Die elektrohydraulischen Verstelleinheiten 24, 26 der Hydromaschinen 4, 8 wirken in stromlosem Zustand in Abhängigkeit des Arbeitsdrucks in der Arbeitsleitung 6 derart, dass die elektrohydraulische Verstelleinheit 24 das Verdrängungsvolumen Vg oberhalb eines systemspezifischen Arbeitsdrucks in Richtung negativem Maximum -Vgmax und unterhalb davon in Richtung positivem Maximum +Vgmax verstellt.

Der Antrieb 1 weist zum Erfassen der für die Steuerung und/oder Regelung notwendigen Ist-Werte des Arbeitsdrucks und Schwenkwinkels einen mit der Arbeitsleitung 6 verbundenen Drucksensor 38 und je einen mit der jeweiligen Schrägscheibe 34 gekoppelten Schwenkwinkelsensor 40 auf, die mit der Steuereinheit 28 signalverbunden sind.

Die - wie bereits erwähnt - jeweils auf der "EOC"-Einheit basierenden Hydromaschinen 4, 8 können bauartbedingt in bestimmten Betriebszuständen eine hohe Schwenkwinkelgeschwindigkeit und/oder einen hohen Schwenkwinkelgeschwindigkeits-Gradienten der jeweiligen Schrägscheibe 34 aufweisen. Beides kann zu unerwünschten Belastungen der Hydromaschinen 4, 8 führen.

Zu nennen ist hier insbesondere eine hohe Aufprallgeschwindigkeit der Schrägscheibe 34 an mechanische -Vgmax oder +Vgmax -Anschläge. Diese führt insbesondere zu hohen Belastungen des Triebwerks, von Verbindungs- und Verstellsystemelementen, sowie der mechanischen Verbindung eines Gebers des Schwenkwinkelsensors 40 mit der Schrägscheibe 34. Beispielsweise können gelenkig ausgeführte Verbindungen des Kugelzapfens der Schwenkwiege, sowie der Gleitschuhe des Stell- und/oder Gegenkolbens betroffen sein.

Hinzu kommt, dass die hohe Schwenkwinkelgeschwindigkeit und deren Dynamik, also der genannte Gradient, auch abseits der genannten Anschläge zu Kavitation führen können. Dies betrifft insbesondere Betriebszustände derjenigen der Hydromaschinen 4, 8, die im Pumpenbetrieb arbeitet. Im Zugbetrieb des Fahrantriebes betrifft dies die Hydromaschine 4, im Schleppbetrieb die Hydromaschine 8. Dabei muss im Pumpenbetrieb Druckmittel aus dem Tank T über den Sauganschluss S gemäß Figur 2 angesaugt werden. Beim Ansaugen kann der (Ansaug-) Druck auf der Saugseite S unter den Dampfdruck des Druckmittels fallen, sodass Kavitation auftreten kann. Hieraus resultiert eine jeweilige Betriebsgrenze der jeweiligen Hydromaschine 4, 8, die in Abhängigkeit der Betriebsgrößen Drehzahl, Verdrängungsvolumen und Druck im Tank T (Ansaugdruck), sowohl in Abhängigkeit von deren zeitlichen Gradienten in der Steuereinheit 28 eingerichtet ist.

Erfindungsgemäß ist die Steuereinheit 28 derart ausgestaltet, dass darin solch problematische Betriebszustände als Betriebsgrenzen abgelegt sind. Dabei wird über die Steuereinheit 28 fortwährend der aktuelle Betriebszustand, basierend auf der Erfassung oder Ermittlung der Betriebsgrößen des Schwenkwinkels, der Schwenkwinkelgeschwindigkeit, des Schwenkwinkelgeschwindigkeits-Gradienten und/oder des Arbeitsdrucks, mit der Betriebsgrenze abgeglichen.

In Abhängigkeit des Ergebnisses dieses Abgleichs, insbesondere wenn der aktuelle Betriebszustand als nahe der Betriebsgrenze oder als diese überschreitend ermittelt wird, erfolgt ein korrigierender Eingriff der Steuereinheit 28 durch Ansteuerung der Verstelleinheit 24 und/oder 26 oder ergänzend des Druckbegrenzungsventils 16. Der Eingriff kann als Sollwert-Korrektur eines Sollwertes des Schwenkwinkels, der Schwenkwinkelgeschwindigkeit, des Schwenkwinkelgeschwindigkeits-Gradienten und/oder des Arbeitsdrucks erfolgen. Ergänzend oder alternativ kann ein Eingriff in den Sollwert der Drehzahl der Antriebsmaschine 2 vorgesehen sein. Der jeweils ursprüngliche Sollwert entstammt vorzugsweise der Betätigung einer Bedienschnittstelle - wie beispielsweise der Auslenkung eines Fahrpedals oder Joysticks - oder einer übergeordneten Antriebsstrategie.

Durch die erfindungsgemäße Ausgestaltung und den Eingriff der Steuereinheit 28 können die genannten Belastungen auf ein unkritisches Maß reduziert werden.

Des Weiteren kann auf hydraulische und/oder mechanische Limitierungen oder Anschläge des jeweiligen Verdrängungsvolumens, wie sie eingangs beschrieben wurden, verzichtet werden. Zur Redundanz und als Rückfall-Lösung, insbesondere bei Ausfall der Elektronik oder Sensorik, können diese natürlich weiterhin vorgehalten werden.

Zur Begrenzung einer Anprallgeschwindigkeit der Schrägscheibe 34 an einen ihrer EndAnschläge -Vgmax / +Vgmax ist in der Steuereinheit 28 vorzugsweise eine Einrichtung vorgesehen, über die die Schwenkwinkelgeschwindigkeit reduzierbar ist, sobald die Schrägscheibe 34 in ein in der Steuereinheit 28 abgelegtes Schwenkwinkelintervall eintritt, beziehungsweise der Schwenkwinkelsensor 40 den Eintritt ins oder die Annäherung ans Schwenkwinkelintervall erfasst. Mit genannter Erfassung wird dann über die Steuereinheit 28 die Sollwert-Korrektur ausgeführt. Die Einrichtung kann als Schwenkwinkel-Geschwindigkeitsregler vorgesehen sein.

Konkret kann die Begrenzung so erfolgen, dass der (zeitliche) Gradient des Schwenkwinkels aus dem wiederholt abgetasteten Schwenkwinkel über die Steuereinheit 28 ermittelt wird und in Folge durch Multiplikation mit einem vorbestimmt, insbesondere parametriert abgelegten, Korrektur-Faktor multipliziert wird. Das resultierende Produkt stellt dann eine Sollwert-Korrektur mit dem Sollwert entgegengesetzten Vorzeichen dar und wird additiv mit diesem verbunden. Aus dieser Sollwert-Korrektur folgt dann die gewünschte Verlangsamung der
Schwenkgeschwindigkeit.

Um die Anschläge -Vgmax und +Vgmax herum wirkt somit über die Steuereinheit 28 eine Begrenzung der Schwenkwinkel-Geschwindigkeit zur Limitierung der Aufpralldynamik, wodurch die genannten Komponenten mit geringerem vorrichtungstechnischen Aufwand gegen Beschädigung geschützt sind.

In der Steuereinheit 28 ist als Betriebsgrenze vorzugsweise ein zulässiges Verdrängungsvolumen der jeweiligen Hydromaschine - oder die bauartbedingte, zugrundeliegende geometrische Größe, wie beispielsweise der Schwenkwinkel - in Abhängigkeit der Drehzahl abgelegt.

Ergänzend kann als Betriebsgrenze das zulässige Verdrängungsvolumen in Abhängigkeit des Arbeitsdrucks der Arbeitsleitung 6, des Niederdrucks und/oder der Temperatur des Druckmittels oder des Triebwerks in der Steuereinheit 28 abgelegt sein.

Die erfindungsgemäße Begrenzung wirkt in einer möglichen Ausgestaltung unabhängig. von sonstigen Anforderungen oder Wünschen.

Der Schwenkwinkel kann beispielsweise noch stärker begrenzt werden, falls das System einen geringeren Druckmittelvolumenstrom aufweist oder eine geringere Leistungsanforderung hat. Das Überschreiten der Betriebsgrenze wird aber zuverlässig verhindert.

Insbesondere ist die erfindungsgemäß ausgestaltete Steuereinheit 28 für einen Betriebszustand vorteilhaft, in dem der Antrieb 1 in einen intensiven Schleppbetrieb geht. Dieser ist auch als Hochleistungsbremsen bekannt, wobei die mit dem Abtrieb gekoppelte Hydromaschine 8 in kurzer Zeit, also mit hoher Dynamik, mittels Durchschwenken ihrer Schrägscheibe 34 vom Motorbetrieb in den Pumpenbetrieb übergeht. Hierbei besteht bei zu hoher Dynamik des Schwenkwinkels, insbesondere im Bereich des Nulldurchgangs des Verdrängungsvolumens ein erhöhtes Kavitationsrisiko. Dieses wird durch die erfindungsgemäß eingreifende Steuereinheit 28 eliminiert oder zumindest gesenkt.

Offenbart ist eine Hydromaschine im offenen hydraulischen Kreis, deren Verdrängungsvolumen elektronisch erfassbar und regelbar ist, wobei eine Steuereinheit mit wenigstens einer, in Abhängigkeit von wenigstens einer erfassbaren Betriebsgröße definierten Betriebsgrenze eingerichtet ist, sodass über die Steuereinheit ein anforderbarer Arbeitsdruck, ein anforderbares Verdrängungsvolumen, eine anforderbare Drehzahl, ein anforderbares Drehmoment, ein anforderbarer Druckmittelvolumenstrom, eine anforderbare Leistung, und/oder wenigstens ein zeitlicher Gradient davon, in Abhängigkeit der wenigstens einen erfassten Betriebsgröße auf einen zulässigen Wert begrenzbar ist oder sind.

## Patentansprüche

1. Hydromaschine zum Betrieb im offenen hydraulischen Kreis, die zum Verstellen ihres Verdrängungsvolumens (Vg) einen Stellzylinder mit einem von einem Stellkolben begrenzten Steuerraum hat, wobei ein Ventil vorgesehen ist, welches von einer elektronischen Steuereinheit (28) in Abhängigkeit einer Anforderung an eine Betriebsgröße der Hydromaschine (4, 8) und eines rückgeführten Ist-Wertes elektrisch derart ansteuerbar ist, dass über das Ventil der Steuerraum mit Stelldruckmittel beschickbar ist und/oder Stelldruckmittel aus dem Steuerraum abführbar ist, **dadurch gekennzeichnet, dass** in der Steuereinheit (28) wenigstens eine Betriebsgrenze der Hydromaschine (4, 8) in Abhängigkeit wenigstens einer Betriebsgröße der Hydromaschine (4, 8) eingerichtet ist, und dass in Abhängigkeit davon über die Steuereinheit (28) die Ansteuerung des Ventils derart beeinflussbar ist, dass die Betriebsgrenze einhaltbar ist.

2. Hydromaschine nach Anspruch 1, wobei die Anforderung ein Soll-Arbeitsdruck (psoll), ein Soll-Verdrängungsvolumen (Vgsoll) oder eine diesem zugrundeliegende oder zugeordnete, kinematische oder geometrische Soll-Größe (asoll), eine Soll-Drehzahl (nsoll), ein Soll-Drehmoment (Tqsoll), ein Soll-Druckmittelvolumenstrom (Qsoll), eine Soll-Leistung (Psoll) der Hydromaschine (4, 8) oder ein zeitlicher Gradient (dtsoll) davon ist.

3. Hydromaschine nach Anspruch 1 oder 2, wobei die wenigstens eine Betriebsgrenze ein zulässiger Arbeitsdruck (plim), ein zulässiges Verdrängungsvolumen (Vglim), eine zulässige Drehzahl (nlim), ein zulässiges Drehmoment (Tqlim), ein zulässiger Druckmittelvolumenstrom (Qlim), eine zulässige Leistung (Plim) der Hydromaschine (4, 8) oder ein zulässiger zeitlicher Gradient (dtlim) davon ist.

4. Hydromaschine nach einem der Ansprüche 1 bis 3, wobei die wenigstens eine Betriebsgröße ein aktueller Arbeitsdruck (p), ein aktueller Ansaugdruck (ps), eine aktuelle Temperatur (T), ein aktuelles Verdrängungsvolumen (Vg), eine aktuelle Drehzahl (n), ein aktuelles Drehmoment (Tq), ein aktueller
Druckmittelvolumenstrom (Q), eine aktuelle Leistung (P) der Hydromaschine (4, 8) oder ein zeitlicher Gradient (dt) davon ist.

5. Hydromaschine nach einem der vorhergehenden Ansprüche, die auf eine Betriebsart, insbesondere einen Pumpenbetrieb oder einen Motorbetrieb optimiert ausgelegt ist.

6. Hydromaschine nach einem der vorhergehenden Ansprüche, wobei die wenigstens eine Betriebsgrenze in Abhängigkeit von Betriebsarten der Hydromaschine (4, 8) eingerichtet ist, insbesondere in Abhängigkeit eines Pumpenbetriebs und eines Motorbetriebs.

7. Hydromaschine nach einem der vorhergehenden Ansprüche, wobei die wenigstens eine Betriebsgrenze in Abhängigkeit einer Nenngröße der Hydromaschine (4, 8), insbesondere einer Nenndrehzahl oder eines Nenndrucks, eingerichtet ist.

8. Hydromaschine nach einem der vorhergehenden Ansprüche mit einer jeweiligen Erfassungseinheit (40, 38) zur Erfassung des rückzuführenden Ist-Wertes und/oder der wenigstens einen Betriebsgröße.

9. Verfahren zur Steuerung einer Hydromaschine (4, 8) im offenen hydraulischen Kreis, die zum Verstellen ihres Verdrängungsvolumens (Vg) einen Stellzylinder (32) mit einem von einem Stellkolben begrenzten Steuerraum hat, wobei ein Ventil (30) vorgesehen ist, welches von einer elektronischen Steuereinheit (28) in Abhängigkeit einer Anforderung an eine Betriebsgröße der Hydromaschine (4, 8) und eines rückgeführten Ist-Wertes elektrisch ansteuerbar ist, und über das der Steuerraum mit Stelldruckmittel beschickbar ist und/oder über das Stelldruckmittel aus dem Steuerraum abführbar ist, wobei in der Steuereinheit (28) wenigstens eine Betriebsgrenze der Hydromaschine (4, 8) in Abhängigkeit wenigstens einer Betriebsgröße der Hydromaschine (4, 9) eingerichtet ist, mit Schritten
Erfassen der Anforderung,
Erfassen des rückzuführenden Ist-Wertes und Ermitteln einer Abweichung in Abhängigkeit der beiden,
Ermitteln eines Ansteuersignals für das Ventil (30) in Abhängigkeit der Abweichung, und Ansteuern des Ventils (30) damit,
**gekennzeichnet durch** Schritte
Erfassen der wenigstens einen Betriebsgröße, und in Abhängigkeit davon Ermitteln, ob die Betriebsgrenze verletzt wird oder durch oben genanntes Ansteuern verletzt würde, und falls ja,
Beeinflussen des Ansteuersignals oder der zugrundeliegenden Anforderung oder der Abweichung derart, dass die Betriebsgrenze eingehalten wird.

10. Verfahren nach Anspruch 9, wobei die Betriebsgrenze ein zulässiges Verdrängungsvolumen oder eine dem Verdrängungsvolumen zugrundeliegende, kinematische Größe ist, und wobei die wenigstens eine Betriebsgröße eine Drehzahl ist.

11. Verfahren nach Anspruch 10, wobei wenigstens eine zusätzliche Betriebsgröße, in Abhängigkeit von der die Betriebsgrenze des zulässigen Verdrängungsvolumens eingerichtet ist, ein Niederdruck oder Ansaugdruck, ein Arbeitsdruck oder Hochdruck und/oder eine Temperatur ist.

12. Verfahren nach einem der Ansprüche 9 bis 11, wobei ein Hochdruck, ein Verdrängungsvolumen, ein Druckmittelvolumenstrom und/oder ein Drehmoment angefordert wird oder werden, und wobei der Hochdruck, das Verdrängungsvolumen oder eine diesem zugrundeliegende, kinematische Größe, und/oder ein Gradient des Verdrängungsvolumens oder der Größe in Abhängigkeit der wenigstens einen Betriebsgröße begrenzt wird oder werden.

13. Verfahren nach einem der Ansprüche 9 bis 12, wobei die wenigstens eine Betriebsgrenze und ihre Abhängigkeit von der wenigstens einen Betriebsgröße über einen Prüfstandsversuch, eine Simulation oder eine Abnahmemessung an der Hydromaschine (4, 8) ermittelt werden.
